(19) Europäisches Patentamt
European Patent Office
Office européen des brevets

(11) Veröffentlichungsnummer: **0 400 287 A2**

(12) # EUROPÄISCHE PATENTANMELDUNG

(21) Anmeldenummer: **90105193.8**

(51) Int. Cl.[5]: **C08G 75/23, F21V 7/22**

(22) Anmeldetag: **20.03.90**

(30) Priorität: **22.03.89 DE 3909487**

(43) Veröffentlichungstag der Anmeldung: **05.12.90 Patentblatt 90/49**

(84) Benannte Vertragsstaaten: **AT BE DE ES FR GB NL SE**

(71) Anmelder: **BASF Aktiengesellschaft**
**Carl-Bosch-Strasse 38**
**D-6700 Ludwigshafen(DE)**

(72) Erfinder: **Ahlers, Juergen**
**Beethovenstrasse 32**
**D-6845 Gross-Rohrheim(DE)**
Erfinder: **Ittemann, Peter, Dr.**
**217 Manor House Mill**
**Fort Mill, S.C. 29715(DE)**
Erfinder: **Hanelt, Rainer**
**Jakob-Schoener-Strasse 13**
**D-6520 Worms 22(DE)**

(54) **Polyarylethersulfone für lichttechnische Anwendungen.**

(57) Verwendung von Polyarylethersulfonen mit einem Gehalt an flüchtigen Anteilen bei 5 min. Erhitzen auf 250 °C von weniger als 250 ppm zur Herstellung von Reflektoren für Beleuchtungseinrichtungen und Halterungen für Beleuchtungskörper.

EP 0 400 287 A2

Xerox Copy Centre

## Polyarylethersulfone für lichttechnische Anwendungen

Die vorliegende Erfindung betrifft die Verwendung von Polyarylethersulfonen mit einem Gehalt an flüchtigen Anteilen bei 5 min Erhitzen auf 250 °C von weniger als 250 ppm zur Herstellung von Reflektoren für Beleuchtungseinrichtungen und Halterungen für Beleuchtungskörper.

Polyarylethersulfone zählen zur Klasse der hochtemperaturbeständigen Thermoplaste und eignen sich von daher insbesondere für Anwendungen, bei denen eine gute Wärmebeständigkeit auch über längere Zeiträume gefordert wird.

Dies ist bei vielen Anwendungen im lichttechnischen Bereich, z.B. bei der Herstellung von Reflektoren für Beleuchtungseinrichtungen (wie Scheinwerferreflektoren) oder Halterungen für Beleuchtungskörper der Fall.

Bislang wurden zur Herstellung solcher Materialien überwiegend metallische, keramische oder duroplastische Werkstoffe eingesetzt, die jedoch alle den Nachteil aufweisen, daß sie nicht auf einfache Weise in beliebige Formen überführt werden können.

In der EP-A 97 370 werden Mischungen aus Polyarylethersulfonen zur Herstellung von Leiterplatten und elektrischen Steckverbindern empfohlen; das Anforderungsprofil für diesen Anwendungsbereich ist jedoch mit dem Anforderungsprofil bei der Herstellung von Scheinwerferreflektoren und Lampenhalterungen nur bedingt vergleichbar.

In der EP-A 274 098 wird ein Verfahren zur Herstellung von teilchenförmigen hochtemperaturbeständigen Polymerisaten beschrieben, welches Produkte mit einer engen Korngrößenverteilung und besserer Verarbeitbarkeit liefert. Über die Anwendungen der erhaltenen Produkte im lichttechnischen Bereich finden sich keinerlei Angaben.

Aufgabe der vorliegenden Erfindung war es daher, Halterungen für Beleuchtungskörper bzw. Reflektoren für Beleuchtungseinrichtungen zur Verfügung zu stellen, die leicht herstellbar sind und gute Gebrauchseigenschaften aufweisen.

Diese Aufgabe wird gelöst durch die Verwendung von Polyarylethersulfonen mit einem Gehalt an flüchtigen Anteilen bei 5 min Erhitzen auf 250 °C von weniger als 250 ppm zur Herstellung von Reflektoren für Beleuchtungseinrichtungen und Halterungen für Beleuchtungskörper.

Bevorzugte Polyarylethersulfone sind Anspruch 2 zu entnehmen.

Weiterhin werden die so erhältlichen Reflektoren bzw. Halterungen zur Verfügung gestellt.

Polyarylethersulfone werden in einer Vielzahl von Patentanmeldungen beschrieben, auf die hier nicht im einzelnen eingegangen werden soll.

Nur stellvertretend sei hier auf die DE-A 15 45 106 und die DE-A 15 20 131 verwiesen. Auch Verfahren zur Herstellung von Polyarylethersulfonen werden in diesen Anmeldungen bereits angeführt. Darüber hinaus gibt es eine Vielzahl von Patentanmeldungen, in denen spezielle Verfahrensvarianten beschrieben werden.

Im Rahmen der vorliegenden Erfindung wurde intensiv untersucht, in welchem Maße sich diese bekannten Produkte zur Herstellung von Reflektoren für Beleuchtungseinrichtungen bzw. Halterungen für Beleuchtungskörper eignen.

Dabei stellte sich heraus, daß innerhalb relativ kurzer Zeit die erzielbare Lichtausbeute der Beleuchtungseinrichtungen bzw. Beleuchtungskörper zurückging, was in der Praxis von erheblichem Nachteil ist.

Eingehende Untersuchungen zeigten, daß dieser nachteilige Effekt auf die Bildung eines Belags auf den Reflektoren bzw. Beleuchtungskörpern zurückzuführen ist, welcher sich aus flüchtigen Verbindungen bildet, die bei der Erwärmung der eingesetzten Polyarylethersulfone frei werden.

Infolgedessen beruht die vorliegende Erfindung darauf, für die Herstellung von Reflektoren für Beleuchtungseinrichtungen oder Halterungen für Beleuchtungskörper Polyarylethersulfone mit einem Gehalt an flüchtigen Bestandteilen von weniger als 250 ppm, vorzugsweise weniger als 200 ppm einzusetzen. Prinzipell sind alle Polyarylethersulfone einsetzbar, die man durch Polykondensation von Diolen der allgemeinen Formel

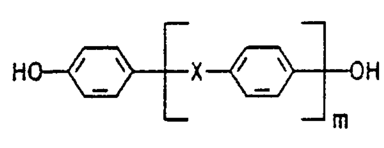

oder deren kernsubstituierten $C_1$-$C_6$-Alkyl-, $C_1$-$C_6$-Alkoxy-, Aryl-, Cl- oder F-Derivaten, mit Dihalogenverbindungen der allgemeinen Formel

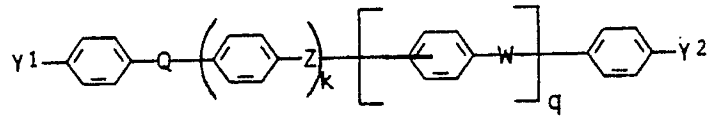

oder deren kernsubstituierten $C_1$-$C_6$-Alkyl-, $C_1$-$C_6$-Alkoxy-, Aryl-, Chlor- oder Fluorderivaten, wobei X und Z eine chemische Bindung, -O-, -S-,

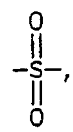, 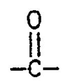 oder 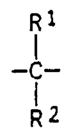 ,

$Y^1$ und $Y^2$ Cl oder F,

Q, W - 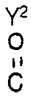 - oder

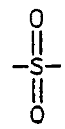 ,

$R^1$ und $R^2$ Wasserstoff, Alkylgruppen mit 1 bis 6 C-Atomen, Alkoxygruppen mit 1 bis 6 C-Atomen oder Arylgruppen oder deren halogenierte Derivate darstellen, und
k und q den Wert 0 oder 1, und m den Wert 0, 1, 2 oder 3 haben, erhält.

Bevorzugt hat m den Wert 0 oder 1.

Als bevorzugte Diole seien nachfolgend einige Verbindungen aufgeführt. Diese können, wie auch die Dihalogenverbindungen einzeln oder in beliebigen Mischungen eingesetzt werden.

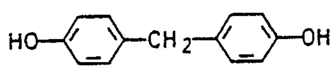 Di-(4-hydroxyphenyl)methan

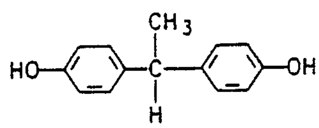 2,2-Di(4-hydroxyphenyl)ethan

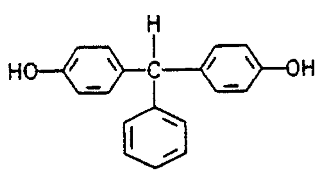 Phenyldi-(4-hydroxyphenyl)methan

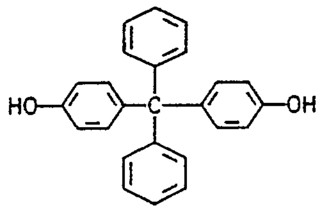

Diphenyl-di-(4-hydroxyphenyl)methan

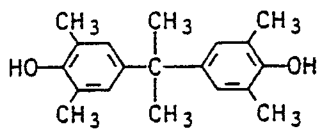

Tetramethylbisphenol A
(2,2-Di-(4-hydroxy-3,5-dimethyl-phenyl)propan)

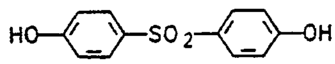

4,4'-Dihydroxydiphenylsulfon
(Bisphenol S)

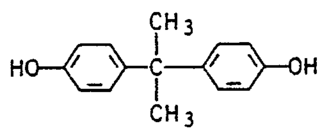

2,2-Di(4-hydroxyphenyl)propan
(Bisphenol A)

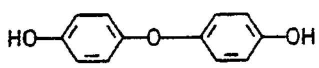

4,4'-Dihydroxydiphenylether

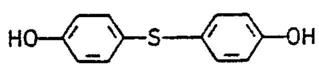

4,4'-Dihydroxydiphenylsulfan
(Bisphenol T)

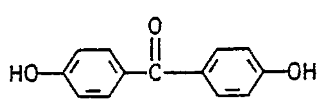

4,4'-Dihydroxybenzophenon

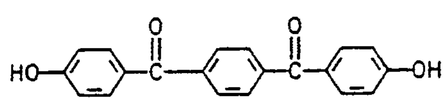

1,4-Di-(4'-hydroxyphenyl-carbonyl)benzol

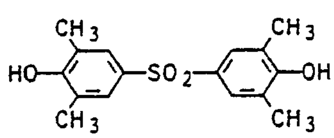

Tetramethylbisphenol S
(3,3',5,5'-Tetramethyl-4,4'-dihydroxy-diphenylsulfon)

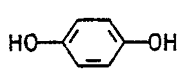

Hydrochinon

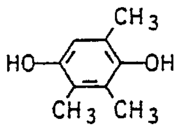

2,3,6-Trimethylhydrochinon

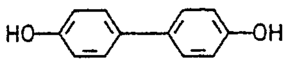

4,4'-Dihydroxydiphenyl

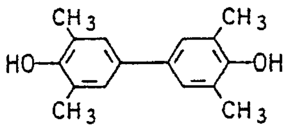

3,3',5,5'-Tetramethyl-4,4'-dihydroxydiphenyl

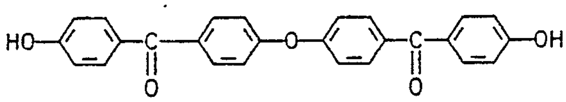

4,4'-Di-(4-hydroxyphenylcarbonyl)diphenylether

Von den vorstehend aufgeführten Dihydroxyverbindungen werden 4,4'-Dihydroxydiphenyl, 3,3',5,5'-Tetramethyl-4,4'-dihydroxydiphenyl, Tetramethyl-Bisphenol A, Bisphenol A, Bisphenol S, Bisphenol T und 2,3,6-Trimethylhydrochinon besonders bevorzugt.

Als Substituenten am Kern der Dihydroxyverbindung I werden Alkyl- oder Alkoxygruppen mit 1 bis 6 C-Atomen wie Ethyl-, Propyl-, n, i- oder t-Butyl bzw. die entsprechenden Alkoxygruppen und Arylgruppen bevorzugt.

In den Dihalogenverbindungen der vorstehend genannten allgemeinen Formel II sind die Substituenten am Kern vorzugsweise Alkylgruppen mit 1 bis 4 C-Atomen, z.B. Methyl, i- oder n-Propyl oder t-Butyl oder Cl oder F.

Die folgenden Dihalogenverbindungen der allgemeinen Formel II seien als bevorzugte Beispiele aufgeführt.

Bezeichnung der Chlorverbindung

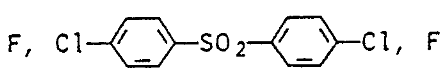

4,4'-Dichlordiphenylsulfon

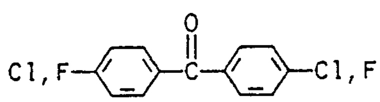

4,4'-Dichlorbenzophenon

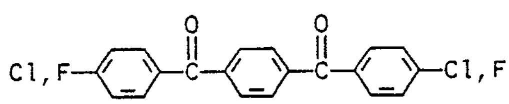

1,4-Di(4'-chlorphenylcarbonyl)-benzol

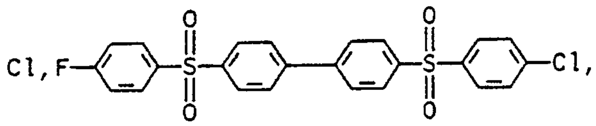

4,4'-Di-(4'-chlorphenyl-sulfonyl)-diphenyl

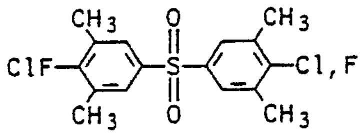

3,3',5,5'-Tetramethyl-4,4'-dichlordiphenylsulfon

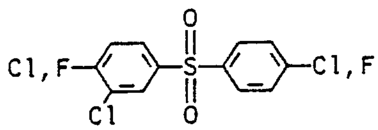

3'-Chlor-4,4'-Dichlordiphenyl-sulfon

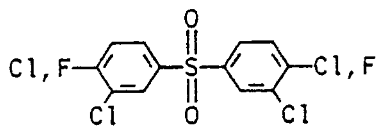

3,3',4,4'-Tetrachlordiphenyl-sulfon

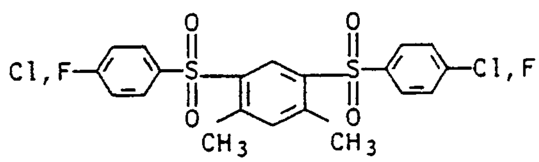

2,4-Dimethyl-1,5-di(4'-chlor-phenylsulfon)benzol

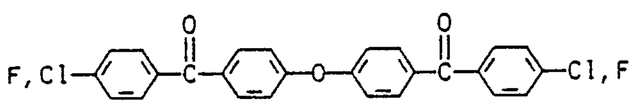

4,4'-Di(4-chlorphenyl-carbonyl)diphenylether

Von den vorstehend aufgeführten Dihalogenverbindungen werden 3.3'.5.5'-Tetramethyl-4,4'dichlordiphenylsulfon, 4.4'-Di(4'-chlorphenylsulfonyldiphenyl, 4,4'-Difluorbenzophenon und 1.4-Di-(4-chlorphenylcarbonyl)benzol bevorzugt.

Erfindungsgemäß verwendet werden können sowohl statistische als auch Blockcopolymere aus Dihydroxyverbindungen und Dihalogenverbindungen.

Vorzugsweise werden Polyarylethersulfone mit wiederkehrenden Einheiten der Formeln I und oder II

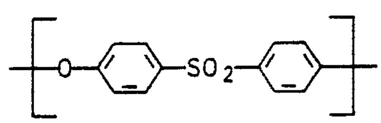

I

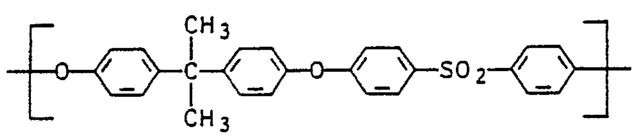

II

verwendet.

Die relative Viskosität der erfindungsgemäß verwendeten Polyarylethersulfone liegt im allgemeinen im Bereich von 0.3 bis 4.5. vorzugsweise von 0.35 bis 2.0 und insbesondere 0.35 bis 1.5 (gemessen in 1 gew.%iger Lösung in o-Dichlorbenzol.Phenol (1:1 Gewichtsverhältnis)). Dies entspricht im allgemeinen Molekulargewichten (Gewichtsmittelwerten) im Bereich von 10.000 bis 200.000.

Verfahren zur Herstellung solcher Polymerisate sind an sich bekannt und z.B. in der EP-A 113 112 und der EP-A 135 130 sowie der EP-A 1879 beschrieben.

Besonders bevorzugt wird die Polykondensation in aprotischen polaren Lösungsmitteln mit wasserfreien Alkalicarbonaten als Katalysatoren durchgeführt. Ein besonders gut geeignetes Lösungsmittel ist N-Methylpyrrolidon in Verbindung mit wasserfreiem $K_2CO_3$ als Katalysator. Als weitere aprotische Lösungsmittel seien beispielsweise Dimethylsulfoxid, Dimethylsulfon, Diphenylsulfon, Dimethylacetamid und Dimethylformamid genannt.

Wesentlich ist, daß die erfindungsgemäß verwendeten Polyarylethersulfone einen Gehalt an flüchtigen Anteilen, gemessen bei 5-minütigem Erhitzen auf 250° C von weniger als 250 ppm, vorzugsweise 100 - 200 ppm und insbesondere 110 - 170 ppm aufweisen.

Derartig niedrige Gehalte an flüchtigen Bestandteilen können durch entsprechende Extraktion der Polyarylethersulfone erhalten werden; insbesondere erhält man sie jedoch vorteilhaft nach dem Verfahren, welches in der EP-A 274 098 beschrieben ist. Wegen näherer Verfahrensbedingungen sei hier auf diese Patentanmeldung selbst verwiesen.

Die erfindungsgemäß verwendeten Polyarylethersulfone können weitere polymere Zusatzstoffe, faser- und/oder teilchenförmige Füllstoffe und übliche Zusätze und Verarbeitungshilfsmittel enthalten, solange die Begrenzung hinsichtlich der flüchtigen Anteile erfüllt ist. Als bevorzugte polymere Füllstoffe seien hier Polyaryletherketone und flüssigkristalline Polymere erwähnt; bevorzugte Füllstoffe sind Glasfasern und Wollastonit sowie C-Fasern.

Übliche Zusätze und Verarbeitungshilfsmittel sind Gleit- und Entformungsmittel, Stabilisatoren gegen thermische Belastung oder UV-Strahlung, Farbstoffe und Pigmente, um nur einige zu nennen.

Die bei der erfindungsgemäßen Verwendung erhältlichen Reflektoren und Halterungen sind leicht thermoplastisch herstellbar und weisen gegenüber Produkten aus Polyarylethersulfonen mit höherem Gehalt an flüchtigen Anteilen eine deutliche Verringerung der Belagbildung auf.

## Beispiele

Es wurden drei Produkte eingesetzt, aus denen im Spritzguß Prüfkörper zur Bestimmung der flüchtigen Anteile hergestellt wurden.

Die eingesetzten Produkte waren:

A1 Polyarylethersulfon aus wiederkehrenden Einheiten

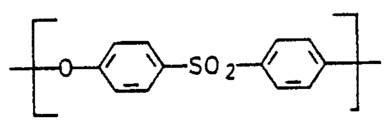

mit einer rel. Viskosität von 0,60 (gemessen in 1-gew.%iger Lösung in o-Dichlorbenzol/Phenol (Gewichtsverhältnis 1 : 1) bei 25° C) und einem Glasfasergehalt von 30 Gew.%, hergestellt nach dem in der EP-A 274 098 beschriebenen Verfahren.

A2 Polyarylethersulfon mit wiederkehrenden Einheiten wie A1, einer rel. Viskosität (gemessen wie bei A1) von 0,60 und einem Glasfasergehalt von 30 Gew.%, erhalten nach dem in der DE-A 15 20 131 beschriebenen Verfahren.

A3: Ultem®2300, Polyetherimid der Fa. General Electric.

Die Produkte wurden in einem Thermolyseofen 5 min auf 250° C erhitzt und die dabei freigesetzten Bestandteile bestimmt

| Produkt | Gehalt an flüchtigen Bestandteilen [ppm] |
|---|---|
| A1 | 130 |
| A2 | 310 |
| A3 | 410 |

Aus A1 hergestellte Halterungen für Beleuchtungskörper zeigten eine wesentlich geringere Belagbildung bei therm. Belastung als Halterungen aus den Produkten A2 und A3, d.h. die Verwendung der Produkte A1 führt zu Reflektoren bzw. Halterungen mit deutl. verbesserten Dauergebrauchseigenschaften.

## Ansprüche

1. Verwendung von Polyarylethersulfonen mit einem Gehalt an flüchtigen Anteilen bei 5 min. Erhitzen auf 250 °C von weniger als 250 ppm zur Herstellung von Reflektoren für Beleuchtungseinrichtungen und Halterungen für Beleuchtungskörper.

2. Verwendung nach Anspruch 1, dadurch gekennzeichnet, daß die Polyarylethersulfone wiederkehrende Einheiten der Formel I und/oder II aufweisen.

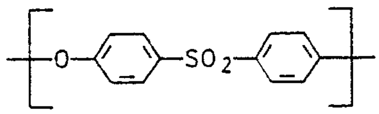

I

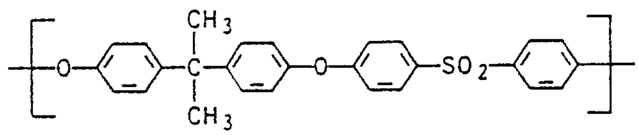

II

3. Reflektoren für Beleuchtungseinrichtungen, erhältlich aus Polyarylethersulfonen mit einem Gehalt an flüchtigen Anteilen nach 5 min. Erhitzen auf 250 °C von weniger als 250 ppm als wesentlichen Komponenten.

4. Halterungen für Beleuchtungskörper, erhältlich aus Polyarylethersulfonen mit einem Gehalt an flüchtigen Anteilen nach 5 min. Erhitzen auf 250 °C von weniger als 250 ppm als wesentlichen Komponenten.